# EUROPEAN PATENT APPLICATION

(11) **EP 2 541 214 A1**
(43) Date of publication of application: **02.01.2013**
(21) Application number: 11005231.3
(22) Date of filing: 28.06.2011
(51) Int. Cl.: G01D 5/165, G01D 3/02, G05B 19/042, A61C 17/00

(54) **Personal care device and method for control thereof**

(71) Applicant: Braun GmbH, 61476 Kronberg/Taunus (DE)
(72) Inventor: König, Felix, 64285 Darmstadt (DE); Vetter, Ingo, 61184 Karben (DE)

(57) **Abstract**

A personal care device, such as an oral care device, is provided with a controller and adjusting means for inputting a desired value and/or desired variation for an operating parameter. The adjusting means include at least one variable input element, such as a potentiometer or a contactless encoder connectable to the controller, wherein the controller includes a detector for detecting an output signal of the variable input element, a comparator for comparing the detected output signal of the variable input element with a stored maximum value and/or a stored minimum value for the output signal, and a command generator for generating a command signal for controlling the operating parameter of the personal care device on the basis of the detected output signal and/or the comparison thereof with the stored minimum and/or maximum values. The variable input element control provides for self-adaption of reference values used for transforming the variable input element output signal into command signals for the control of the oral care device. The variable input element output signal is monitored and, when such monitoring shows a predetermined deviation of the variable input element output signal from the reference values, the reference values are adapted.

## Description

### FIELD OF THE INVENTION

The present invention generally relates to a personal care device and a method of control thereof. For example a personal care device is disclosed comprising a controller for controlling at least one operating parameter of the personal care device and at least one variable input element for inputting a desired value for said operating parameter, where an output signal of said variable input element is detected and compared with a stored maximum value and/or a stored minimum value, and where a command signal for controlling said operating parameter is generated on the basis of the detected output signal and/or the comparison of said output signal with the stored maximum and/or minimum values.

### BACKGROUND OF THE INVENTION

Personal care devices, such as oral care devices sometimes use variable input elements, such as a potentiometer, for controlling variable operation parameters of the oral care device. The operator or user may adjust the variable input element by means of a turning knob, a sliding switch or other input keys connecting to the variable input element so as to input the desired value for the respective operating parameter. For example, an oral care device in terms of a water jet may allow for variation of the water pressure and/or flow rate to adjust the water jet to the users preferences, for example to provide more intense or less intense massaging of the gingiva. Such oral care devices may include a pump for supplying pressurized water to the jet head, wherein a variable input element, such as a potentiometer may be used to adjust the power output of said pump.

An oral care device providing for a water jet that can be adjusted is disclosed, for example, by DE 39 37 875 A1.

When using variable input element controls, it is sometimes difficult to bring the command signal for controlling the operation parameter of the oral care device into line with the output of the variable input element. It is desired to have to the respective operational parameter variability over a certain predefined range. For example, the water pressure of a water jet as an example for an oral care device should be variable between a predefined lower limit and a predefined upper limit. Due to various tolerances of variable input element controls, it is, however, difficult to match these predefined upper and lower limits and the respective range of variation of the operating parameter when transforming the variable input element output signal into the respective command signal for the respective driving unit controlling the said operating parameter. Such variations and tolerances of the variable input element controls may have various reasons. For example, the variable input element as such may have significant tolerances resulting in different output signal levels for the same variable input element position. For example, when setting a plurality of variable input elements of the same type to the same variable input element position, there hardly will be the same output signal, but different signal levels will be provided.

Furthermore, variable input elements are sometimes mounted in such a manner that only a limited subrange of the whole range of variation of the variable input element is available. For example, if a potentiometer used as variable input element having an adjustment range of, for example, 270°, is mounted in a housing providing for end stops, thereby limiting the range of adjustment to, for example, 120°, tolerances relative to the rotational mounting position of the variable input element may cause different output signal levels even when the variable input elements as such do not have tolerances.

### SUMMARY OF THE INVENTION

It is an object of the present invention to provide an improved personal care device, for example an improved oral care device, and an improved method of control thereof that overcome the shortcomings of the prior art and further develop the prior art. It is another object of the present invention to allow for a precise control of the respective operation parameter of the personal care device within a predefined range despite tolerances and variations in the variable input element output signal. It is a further object of the present invention to provide for easy self-calibration of the variable input element control for personal care devices.

According to an aspect, the suggested variable input element control uses stored minimum and/or maximum values for the variable input element output signal and adjusts the stored minimum/maximum values in response to actual output signal values and/or extreme values thereof.

According to an aspect, the variable input element control provides self-adaption of reference values used for transforming the variable input element output signal into command signals for the control of the oral care device. The variable input element output signal is monitored and, when such monitoring shows a predetermined deviation of the variable input element output signal from said reference values, the reference values are adapted.

According to a further aspect, the output signal of the variable input element is detected by a detector and compared to a stored maximum value and/or to a stored minimum value for said output signal, wherein the command signal for setting an operation parameter for controlling the personal care device is generated on the basis of the detected output signal and/or the comparison of said output signal with the stored maximum and/or minimum values. The stored minimum value is reduced if the detected output signal is smaller than the stored minimum value and/or the stored maximum value is increased if the detected output signal is larger than the stored maximum value. For example, the stored minimum value may be reset to correspond to the detected output signal, if the detected output signal is smaller than the stored minimum value. The stored maximum value may be reset to correspond to the detected output signal, if the detected output signal is larger than the stored maximum value.

The above object and other objects, features and advantages of the present invention will become apparent from the following detailed description of embodiments of the invention when taking in connection with the accompanying drawings wherein single features or subcombinations of features of one or more of the described embodiments may have inventive character irrespective of the feature combination provided by the claims.

### BRIEF DESCRIPTION OF THE DRAWINGS

In the drawings show:
- Fig. 1:: a schematic illustration of an oral care device in terms of a water jet device according to an embodiment, wherein a basis of the device includes a water tank and a pressurizing unit for providing pressurized water to a jet head that is part of a hand piece, wherein the water pressure provided by said pressurizing unit may be varied by means of a variable input element control,
- Fig. 2:: a schematic illustration of a variable input element control providing for self-calibration to precisely control the water pressure of the pressurizing unit within a desired pressure range, and
- Fig. 3:: a functional diagram illustrating the routine for calibrating the transformation of the variable input element signal into command signals for the pressure control of the oral care device of the preceding figures.

### DETAILED DESCRIPTION OF THE INVENTION

To allow for control of at least one operating parameter, the personal care device, for example the oral care device, is provided with a controller and adjusting means for adjusting a desired value and/or desired variation for said operating parameter, said adjusting means including at least one variable input element connectable to said controller, wherein said controller includes a detector for detecting an output signal of said variable input element, a comparator for comparing the detected output signal of the variable input element with a stored maximum value and/or a stored minimum value for said output signal, and a command generator for generating a command signal for controlling said operating parameter of the personal care device on the basis of the detected output signal and/or the comparison thereof with the stored minimum and/or maximum values. Suitable variable input elements are for example a potentiometer or a contactless encoder.

When detecting and/or monitoring the output signal of the variable input element reveals that the output signal of the variable input element exceeds the stored maximum value and/or drops below the stored minimum value, the said stored minimum and/or maximum values are reset or adjusted. When the output signal exceeds the stored maximum value, said stored maximum value is increased. If the output signal of the variable input element drops below the stored minimum value, the controller provides for a decrease of the stored minimum value.

The increase of the maximum value and/or the decrease of the stored minimum value may be effected in different ways. For example, an incremental adjustment may be effected in terms of increasing the stored maximum value by a certain amount each time the output signal of the variable input element exceeds the stored maximum value, and/or in terms of decreasing the stored minimum value by a certain amount each time the output signal of the variable input element drops below the stored minimum value.

In addition or alternatively, the stored minimum and or maximum values may be replaced by the detected output signal that exceeds or drops below the stored maximum/minimum values. Said replacement may be helpful in order to achieve a quick self-adaption. In addition or alternatively, when the detector detects an output signal of the variable input element lower than the stored minimum value and/or higher than the stored maximum value, the stored minimum value may be reset to correspond to the detected output signal below the previously stored minimum value or the stored maximum value may be reset to correspond to the detected output signal higher than the previously stored maximum value. According to the present description "to correspond to the detected output signal" means that the stored values are reset to a value which is directly related to the detected outputvalue. This includes any suitable and/or necessary transformation of values, if stored values and detected values are measured in different units as well as a direct reset with the measured values.

To enhance such self-adaption of the stored minimum and maximum values, the initially stored maximum value and/or minimum value may be chosen appropriately on the basis of the possible ranges of the output signal of the variable input element used, taking into account possible tolerances of the variable input element as such and tolerances due to mounting situations. For example, the initially stored minimum value may be preset to be higher than the highest lower limit of the output signal of the variable input element so that during operation of the variable input element, in particular when the variable input element is set to its lowest position, an output signal will be detected that is lower than the preset minimum value what will then trigger the aforementioned self-adaption. For example, if the variable input element that is used, is specified by the manufacturer to have a minimum output signal of, for example, 20, one may expect that - due to possible tolerances - it may happen that the actual minimum output signal of the variable input element may have a value of up to 25. Consequently, the initially stored minimum value for the output signal may be preset to correspond to, for example, 26. These absolute values are chosen arbitrarily as an example and do not limit the scope of the invention.

In addition or alternatively, the initially stored maximum value may be preset to have a value that is in any case lower than the lowest possible maximum value. When during operation of the device, the detector of the controller detects an output signal above the preset maximum value, the aforementioned self-adaption is carried out.

Choosing different values for the initially stored minimum value and the initially stored maximum value is, however, not necessary. According to an alternative embodiment of the invention, the initially stored minimum value and the initially stored maximum value may be preset to correspond to a common value which may be taken from a medium subrange of the expected possible ranges of output signals of the variable input element. The medium subrange may be in the range of the lower limit to the upper limit. Smaller medium subranges inside said range may also be used. When considering possible tolerances of a specific type of variable input element, it may be expected that all different ranges having different upper limits and/or different lower limits include a common medium subrange where all possible ranges of output signals overlap with each other. If a value of such medium subrange is taken for the initially stored minimum and maximum values, the detector of the controller will detect, during operation of the device, an output signal of the variable input element below the preset stored minimum value and an output signal exceeding the preset maximum value what will then trigger the aforementioned resetting of the stored minimum and maximum values.

The reset of the stored minimum and maximum values may be carried out at different points of time. For example, the position of the variable input element may be monitored to determine when the variable input element is moved into one of its end positions, for example, when the user wants to have the operation parameter at its minimum value or its maximum value; for example, when the user wants to have the water pressure set to its minimum pressure or its maximum pressure. When detecting the variable input element in one of its end positions, the corresponding output signal of the variable input element is detected and compared to the stored minimum and maximum values so as to initiate resetting of said stored minimum or maximum value if the detected output signal exceeds the stored maximum value or drops below the stored minimum value.

So as to achieve quicker self-adaption, that means so as to not wait until the variable input element is indeed set into its end position, the output signal of the variable input element may be detected and compared to the stored minimum and/or maximum values in a cyclic manner, that means repeatedly. That means, for example, the output signal of the variable input element may be detected and compared to the stored minimum and/or maximum values each time the device is switched on. Such cyclic repetition of the steps of detecting the output signal and comparing it with the stored minimum and/or maximum values may be carried out at regular intervals, for example every 10 seconds, upon switching on the oral care device. However, the aforementioned steps of detecting the output signal and comparing it to the stored minimum and/or maximum values do not need to be repeated at regular intervals, but may be repeated at irregular intervals. For example, upon switching on the device the said steps may be repeated at short intervals, for example every 5 seconds, whereas on the other hand such intervals may be extended after a predetermined time of operation to an interval of, for example, every 25 seconds. Such irregular intervals take into account that user may vary the respective operational parameter usually at the beginning of the operation, for example when beginning cleaning the teeth, whereas such variation is less often effected towards the end of a cleaning cycle. Additionally or in the alternative, other variations of the intervals at which the aforementioned steps are repeated, may be provided.

In the alternative or additionally, there may be continuous monitoring of the output signal of the variable input element and continuous comparison thereof with the stored minimum and maximum values to surely detect any drop of the output signal below the stored minimum value and increase of the output signal above the stored maximum value immediately. Such continuous monitoring and comparing the output signal may be provided over the entire operation time of the device. Entire operation time shall mean from switching on the device to turning off the device or in the alternative over selective windows of said operation time only.

In order to have previously adapted minimum values and maximum values available for each fresh cycle of operation, the said stored minimum and maximum values may be stored in a non-volatile memory which may allow for storage of the respective minimum and maximum values also during interruption of power supply and/or during time periods where the device is switched off.

Transformation of the respective variable input element signal into a corresponding command signal for controlling the respective operational parameter of the device may be achieved by means of a microcontroller, wherein the microcontroller may evaluate the output signal in comparison to the stored minimum and maximum values. For example, a command generator may determine how far the actually detected output signal of the variable input element deviates from the stored minimum and/or from the stored maximum value. For example, when the stored minimum value is considered to correspond to 0% and the stored maximum value is considered to correspond to 100% of the possible variation range, the actual output signal of the variable input element which is somewhere between the stored minimum and the stored maximum value may be transformed into a value between 0% and 100%. Said value depends on the offset from the minimum value and/or the offset from the maximum value what then may be transformed into a respective command signal to achieve an operation state where the respective operational value assumes a corresponding percentage value of the possible/desired variation range.

For example, the generation of the command signal may include determination of a ratio of the detected output signal to the stored minimum value and/or to the stored maximum value and, in a subsequent step, determination of the command signal in response to the determined ratio, wherein the command signal may be determined to be in between predetermined minimum and maximum values for the command signal.

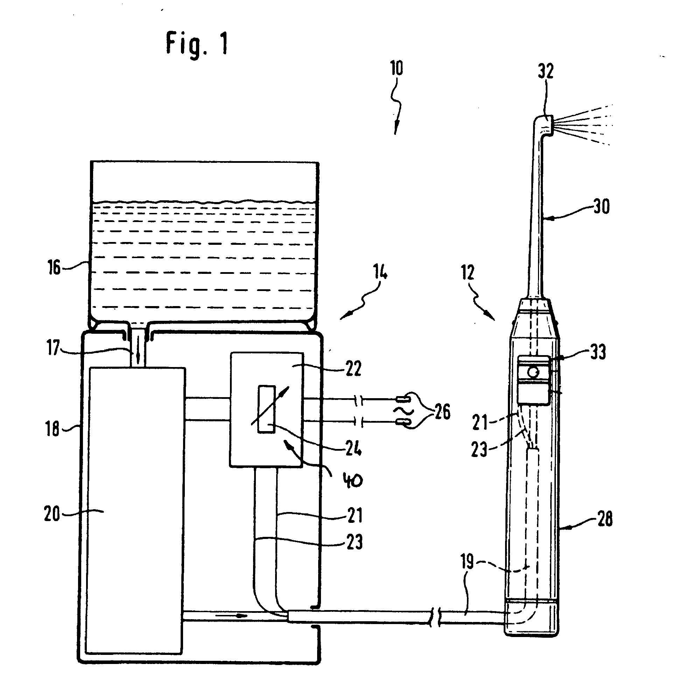

As shown by Fig. 1, the oral care device 10 may include a basic unit 14 which may be formed as a stand-alone unit to be placed, for example, on a washbasin unit. The basic unit 14 may include a water tank 16 for storing water or any other oral care fluid, for example a mixture of water and additional care agents. The tank 16 is positioned on top of a housing 18 which accommodates certain functional components of the oral care device 10. A pressurizing unit in terms of, for example, a pump 20 may be accommodated in the interior of said housing 18, wherein the aforementioned water tank 16 is connected to the inlet of said pump 20 via an inlet duct 17. On the downstream side, the said pump 20 may be connected to a pipe or hose for supplying pressurized water to an application element for applying said pressurized water. For example, as shown by Fig. 1, the pump 20 of basic unit 14 may be connected via a flexible hose 19 to a hand piece 12 which is movable relative to the basic unit 14 and basically incorporates a longitudinal body that can be gripped by a user's hand. The hand piece 12 may include a handle 27 from which a shaft 30 projects to support a jet head 32 at the free end of said shaft 30. Said jet head 32 is connected to the pump 20 via said hose 19 and includes at least one jet orifice so as to eject the pressurized fluid into the user's oral cavity.

To control the operation of said pump 20, control circuitry may be included in said basic unit 14 and/or in said hand piece 12. As shown by Fig. 1, a variable input element 24 may be provided in or at said housing 18 of the basic unit 14, said variable input element 24 being connected to a turning knob or a sliding switch for adjusting the variable input element position. Said variable input element 24 is provided for adjusting the water pressure generating by said pump 20 to adjust for variation of the water jet ejected from jet head 32. For example, a potentiometer or a contactless encoder may be used as variable input element 24.

Although the variable input element 24 is shown to be placed at the basic unit 14, it also could be placed at the hand piece 12. In the embodiment shown in Fig. 1, the hand piece 12 includes only an on-off switch 33 which is connected via lines 21 and 23 to a controller 22 positioned in the housing 18 of the basic unit 14. However, the hand piece 12 may include adjusting means 40, for example, so as to adjust other operational parameters. For example, as already mentioned, it may include the variable input element 24 and respective input keys to adjust the position of the variable input element 24.

As shown by Fig. 1, the controller 22 is connected to the variable input element 24 so as to transform the variable input element signal into a respective command signal for controlling, for example, the pump 20, in particular to adjust the output power of the pump 20, for example in terms of output pressure and/or output flow rate.

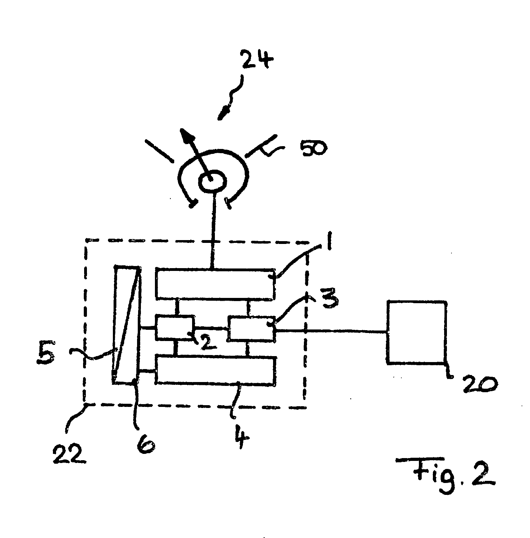

The controller 22 for controlling the pump 20 is shown in further detail in Fig. 2. The variable input element 24, for example a potentiometer or a contactless encoder, is connected to a detector 1 which monitors and detects the actual output signal of the variable input element 24 during operation. An output signal of the variable input element 24 may be, for example, voltage. As shown by Fig. 2, the variable input element 24 may be mounted in a way that only a part of the available adjustment range of the variable input element 24 is actually usable for adjusting the oral care device. For example, end stoppers 50 may restrict the available range of adjustment of the variable input element 24, wherein said end stoppers may be part of the housing 18.

The detected output signal of the variable input element 24 is given to a comparator 2 which compares the detected output signal with stored minimum and maximum values which are stored in a memory 4.

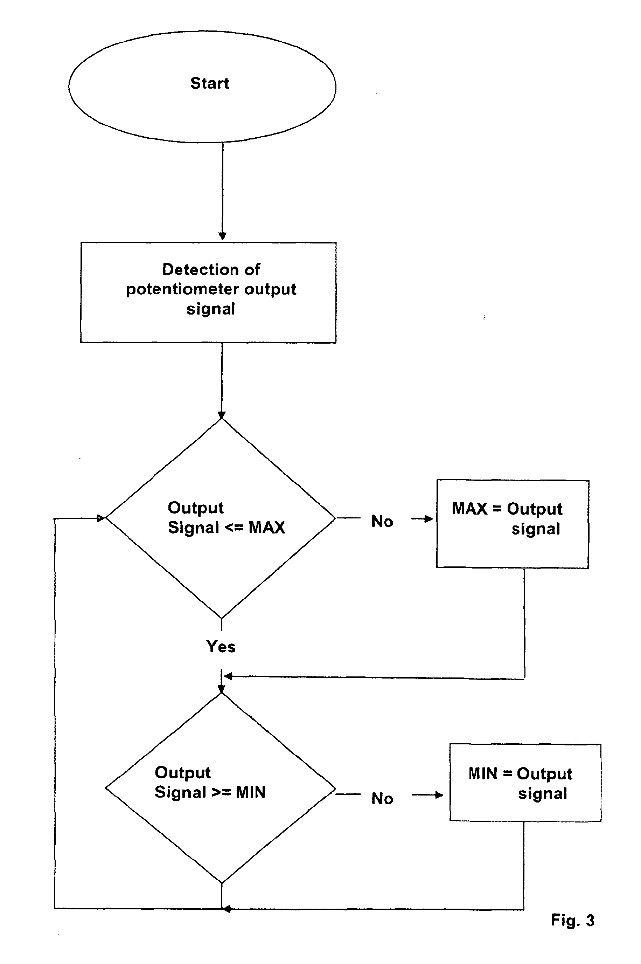

As shown by Fig. 3, depending on the outcome of the said comparison of the detected output signal to the stored minimum and maximum values, self-adjustment of the said stored values may be effected. In particular, if the comparison reveals that the detected output signal exceeds the stored maximum value (max), then the detected output signal may be stored as new maximum value in memory 4. If the said comparison reveals that the detected output signal of variable input element 24 is lower than the stored minimum value (min), resetting of said stored minimum value may be effected. In particular, the detected output signal may be used to replace the stored minimum value, cf. Fig. 3.

The said steps of monitoring/detecting the output signals of the variable input element 24 and comparing the said output signals to the stored minimum and maximum values may be repeated in a loop after switching on the oral care device 10 by means of on-off switch 33. To repeat the steps of monitoring/detecting, comparing and resetting may be helpful to detect any adjustments made by a user of said oral care device. Thus, any adjustment of the variable input element 24 leading to an output signal dropping below the stored minimum value or exceeding the stored maximum value is determined and used for self-adaption of the variable input element control.

As shown by Fig. 2, presetting means 5 and resetting means 6 for presetting and resetting the said stored minimum and maximum values are connected to the comparator 2 and memory 4 effecting the aforementioned self-adjustment routine.

The aforementioned control components, that are the detector 1, the comparator 2, the command generator 3, the memory 4, the presetting means 5 and the resetting means 6 may be part of the controller 22, wherein such components may be realized as software loaded into a microprocessor. Memory 4 may be a non-volatile memory that is connected to said microprocessor.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm.

## Claims

1. A method for controlling an operation parameter of a personal care device (10), comprising the steps of
- detecting an output signal of a variable input element (24),
- comparing the detected output signal of the variable input element (24) with a stored maximum value (max) and/or a stored minimum value (min) for said output signal of the variable input element (24),
- generating a command signal (com) for setting an operation parameter for controlling said personal care device (10) on the basis of the detected output signal and/or the comparison of said output signal with the stored maximum and/or minimum value (max, min), and
- at least one resetting step including reducing the stored minimum value (min), if the detected output signal is smaller than the stored minimum value (min), and/or increasing the stored maximum value (max), if the detected output signal is larger than the stored maximum value (max).

2. The method according to the preceding claim, wherein in said resetting step, the stored minimum value (min) is reset to correspond to the detected output signal, if the detected output signal is smaller than the stored minimum value (min), and/or the stored maximum value (max) is reset to correspond to the detected output signal, if the detected output signal is larger than the stored maximum value (max).

3. The method according to anyone of the preceding claims, further comprising the step of presetting the stored minimum value (min) to a minimum starting value which is larger than the highest lower limit of expected possible ranges of output signals of the variable input element (24) and/or presetting the stored maximum value (max) to a maximum starting value which is smaller than the lowest upper limit of the expected possible ranges of output signals of the variable input element (24).

4. The method according to the preceding claim, further comprising one of the following steps:
i) presetting the minimum starting value to correspond to the upper limit of the expected possible ranges of output signals of the variable input element (24) and/or presetting the maximum starting value to correspond to the lower limit of the expected possible ranges of output signals of the variable input element (24), and
ii) presetting the minimum starting value and the maximum starting value to correspond to a common value of a medium subrange of the expected possible ranges of output signals of the variable input element (24).

5. The method according to anyone of the preceding claims, wherein the steps of detecting the output signal of the variable input element (24) and comparing the detected output signal with the stored maximum value (max) and/or the stored minimum value (min) are repeated for a plurality of times upon switching on the personal care device (10).

6. The method according to anyone of the preceding claims, wherein the stored maximum value (max) and/or the stored minimum value (min) is/are stored in a non-volatile memory (4).

7. The method according to anyone of the preceding claims, wherein the step of generating the command signal includes
- determination of a ratio of the detected output signal to the stored minimum value (min) and/or the stored maximum value (max), and
- determination of the command signal in response to the determined ratio, wherein the command signal is determined to be in between the predetermined minimum and maximum values for the command signal.

8. The method according to anyone of the preceding claims, wherein the output signal of the variable input element is voltage.

9. A personal care device, comprising a controller (22) for controlling at least one operating parameter of the personal care device (10), adjusting means (40) for inputting a desired value for said operating parameter, said adjusting means (40) including at least one variable input element (24) connectable to said controller (22), said controller including a detector (1) for detecting an output signal of said variable input element (24), a comparator (2) for comparing the detected output signal of the variable input element (24) with a stored maximum value (max) and/or a stored minimum value (min) for said output signal of the variable input element (24), and a command generator (3) for generating a command signal for controlling said operating parameter of said personal care device on the basis of the detected output signal and/or the comparison of said detected output signal with the stored maximum value (max) and/or the stored minimum value (min), and resetting means (6) for automatically resetting the stored minimum value (min) and/or the stored maximum value (max), said resetting means (6) being adapted for reducing the stored minimum value (min), if the detected output signal is smaller than the stored minimum value (min), and/or increasing the stored maximum value (max), if the detected output signal is larger than the stored maximum value (max).

10. The personal care device according to the preceding claim, wherein the variable input element (24) is a potentiometer or a contactless encoder.

11. The personal care device according to anyone of the preceding claims 9-10, wherein said resetting means (6) is adapted to automatically reset the stored minimum value (min) to correspond to the detected output signal, if the detected output signal is smaller than the stored minimum value (min), and/or to automatically reset the stored maximum value to correspond to the detected output signal, if the detected output signal is larger than the stored maximum value (max).

12. The personal care device according to anyone of the preceding claims 9-11, further comprising presetting means (5) for presetting the stored minimum value (min) to a minimum starting value larger than the highest lower limit of expected possible ranges of output signals of the variable input element (24) and/or presetting the stored maximum value (max) to a maximum starting value smaller than the lowest upper limit of the expected possible ranges of output signals of the variable input element (24).

13. The personal care device according to anyone of the preceding claims 9-12, further comprising a non-volatile memory (4) for storing the minimum value (min) and/or the maximum value (max) for the output signal of the variable input element (24).

14. The personal care device according to anyone of the preceding claims 9-13, wherein the controller (22) includes a microcontroller comprising at least the comparator (2), the command generator (3) and the resetting means (6).

15. The personal care device according to anyone of the preceding claims 9-14, further comprising a jet head (32) for ejecting an oral care fluid into an oral cavity and/or onto teeth and/or onto the gingiva, a pressurizing unit (4) supplying pressurized fluid to said jet head (32) and a drive unit for driving said pressurizing unit (20), wherein the operating parameter controlled by said controller (22) includes pressure and/or flow rate of said oral care fluid ejected through said jet head (32).
